# EUROPEAN PATENT APPLICATION

(11) **EP 1 815 740 A1**
(43) Date of publication of application: **08.08.2007**
(21) Application number: 07001612.6
(22) Date of filing: 25.01.2007
(51) Int. Cl.: A01M 29/02

(54) **Ultrasound dissuading device for animals**

(30) Priority: 02.02.2006 IT AL20060002
(71) Applicant: Anguzza, Salvatore, 15057 Tortona AL (IT)
(72) Inventor: Anguzza, Salvatore, 15057 Tortona AL (IT)
(74) Representative: Garavelli, Paolo

(57) **Abstract**

An ultrasound dissuading device for animals is composed of an electronic apparatus for emitting ultrasonic waves with a dynamic movement of the emission field, and an operating control system, that operates through internal and control signalling devices for a possible external modem. The device comprises a mobile head (1,29) composed of a sheet container containing a double ultrasound piezoelectric emitter (3,4). Its mobility is obtained with an electronically controlled servomotor (18), placed inside the central body (2,30) of the device, that produces an alternate movement of about 180° along the two directions for every emitter (3,4), allowing a complete coverage of the emission circumference.

## Description

The present invention refers to an ultrasound dissuading device, in particular for protecting various types of environments from the intrusion of various types of animals.

From document DE-A-4304582 a device of this type is known, that rotates along a circle and emits sounds that terrorise possible animals.

There are other types of ultrasound dissuading devices of this type, that however are placed in a fixed position, and therefore are scarcely usable in practice, given their lack of flexibility.

Object of the present invention is solving the above prior art problems, by providing an ultrasound dissuading device that is very flexible, adapted to be applied to any type of environment, with a simple configuration and with a reduced cost.

The above and other objects and advantages of the invention are obtained with an ultrasound dissuading device as claimed in claim 1. Preferred embodiments and non-trivial variations of the invention are the subject matter of the dependent claims.

The present invention will be better described with reference to a preferred embodiment thereof, provided as a non-limiting example, with reference to the enclosed drawings, in which:
- Figure 1 is a perspective view of a first preferred embodiment of the device of the present invention;
- Figure 2 is a front view of the device in Fig. 1;
- Figure 3 is a side view of the device in Fig. 1;
- Figure 4 is a top view of the device in Fig. 1;
- Figure 5 is a schematic view of the electronic circuits of the device of the present invention; and
- Figure 6 is a perspective view of a second preferred embodiment of the device of the present invention.

With reference to the Figures, an embodiment of the ultrasound dissuading device of the present invention will now be described. It will be immediately obvious that numerous variations and modifications can be made to the described device, that they will immediately appear evident for the skilled people in the art and that therefore fall within the scope of the present invention.

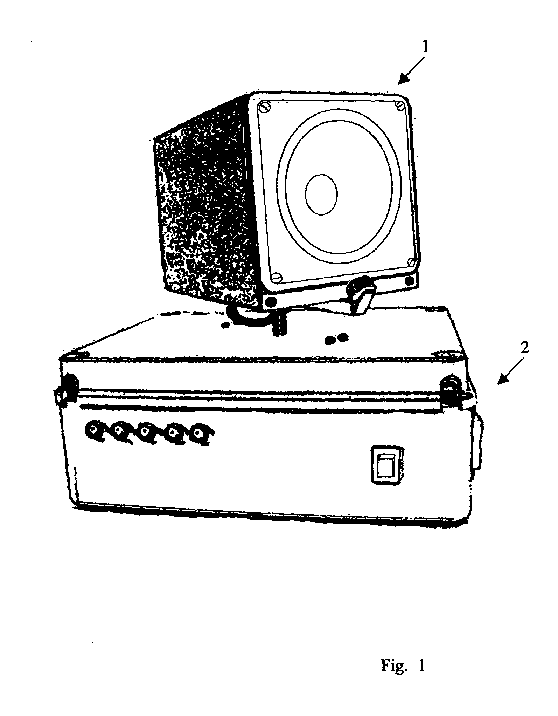

As shown in Fig. 1, the ultrasound dissuading device for animals of the invention is substantially composed of two parts: a fixed base or control unit 2, preferably made of metal or fire-preventing/impermeable plastic material, that contains control electronics and mechanical parts, and a mobile head 1, preferably made of sheet or aluminium.

According to the embodiment shown, the device of the invention could be made with reduced sizes, in order to also reduce its costs: preferred, but not limiting, sizes are for example a length of 25.6 cm, a width of 20 cm and a height of 26 cm.

La head 1 is therefore adapted to emit high frequency sound waves in any direction on a plane or in the space and with any relative motion of the rotary, transverse or longitudinal type.

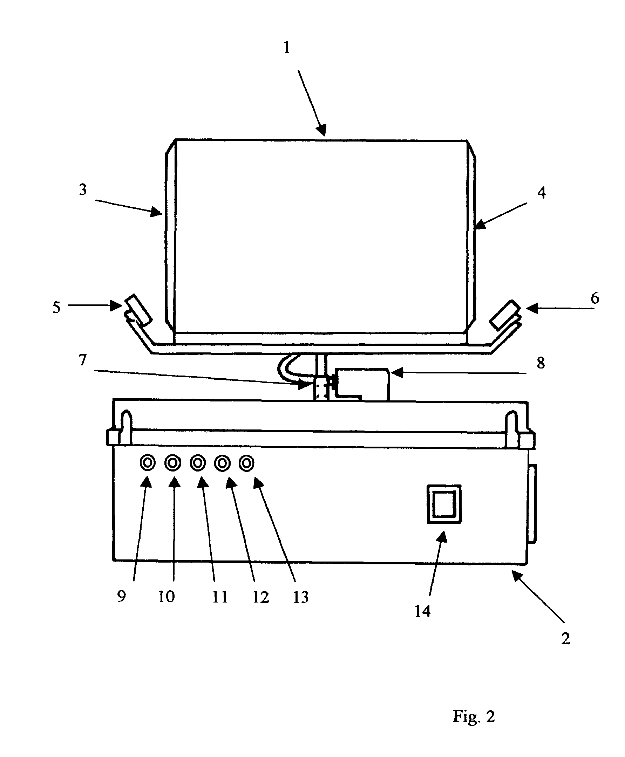

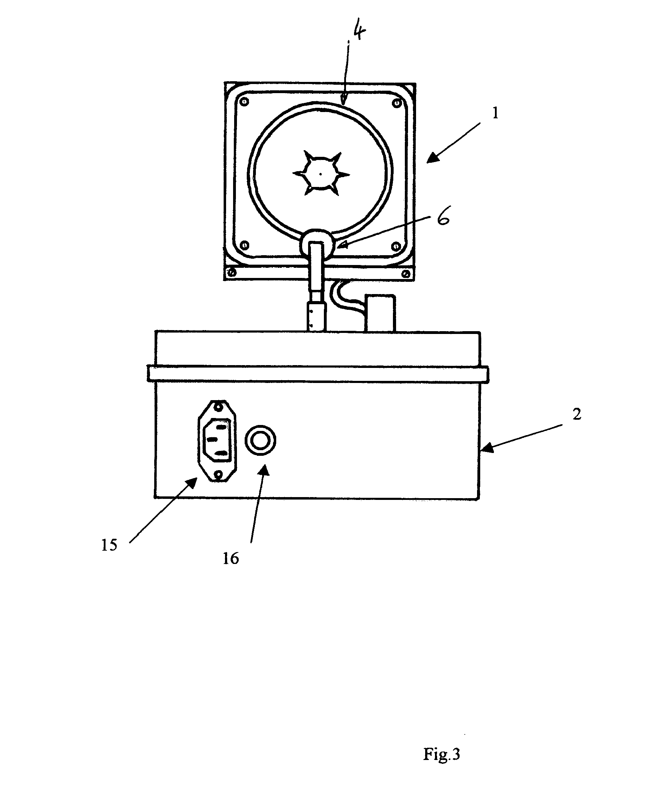

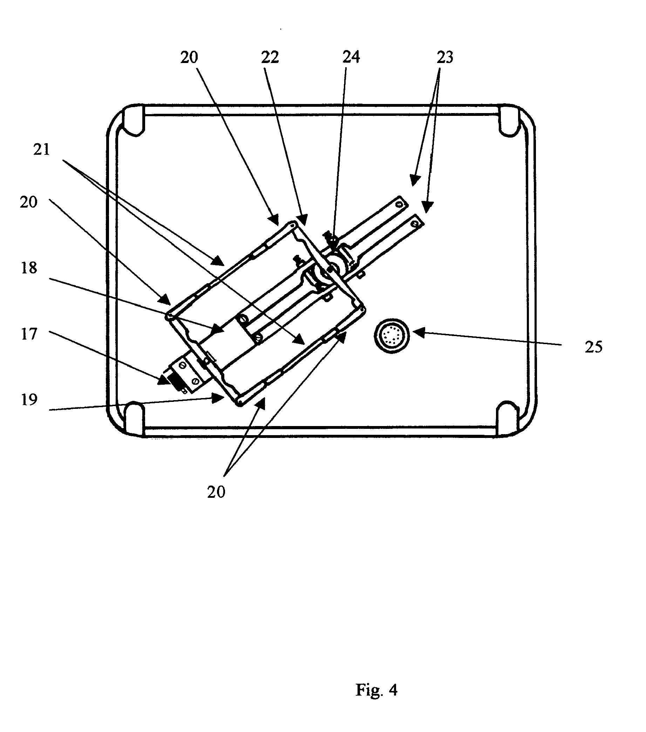

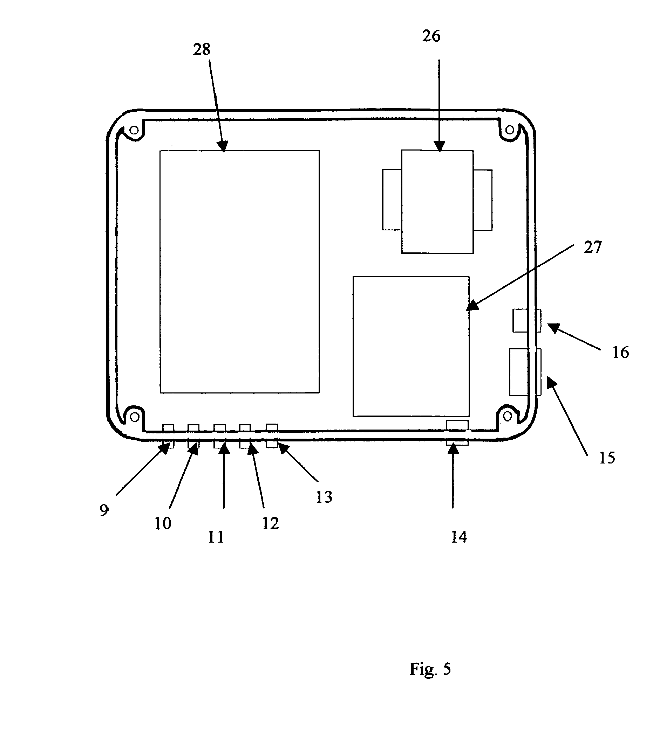

As better seen in Fig. 2, the mobile head 1 provides inside it two ultrasonic piezoelectric transducers ("tweeters") 3, 4, and an ultrasonic detecting module with double external transducers 5, 6 and current-limiting resistors for the tweeters 3, 4. The head 1 is moved by a traction shaft 7, that crosses the control unit 2. Inside the control unit 2 there are: a mechanical part (that is better seen in Fig. 4) essentially composed of a servomotor 18 that is electronically controlled through a micro-controller (not shown) and a system of beams 20 connected to the traction shaft on a ball bearing 24, in addition to an electronic part (that is better seen in Fig. 5) composed of: a low-voltage supply card 27 and related supply transformer 26; a main card 28 comprising the electronics for generating and amplifying the ultrasonic signal, in addition to the micro-controller for managing the servomotor movement; connectors and connecting cable 8 between head and control unit. As shown in Fig. 3, there are further, in one of the side views, the network connector 15 and the protection fuse 16, in addition to one of the already cited tweeters 4 and transducers 6.

The control electronics also provide for an active relay-type protection that limits the current excess in final ultrasonic amplifiers.

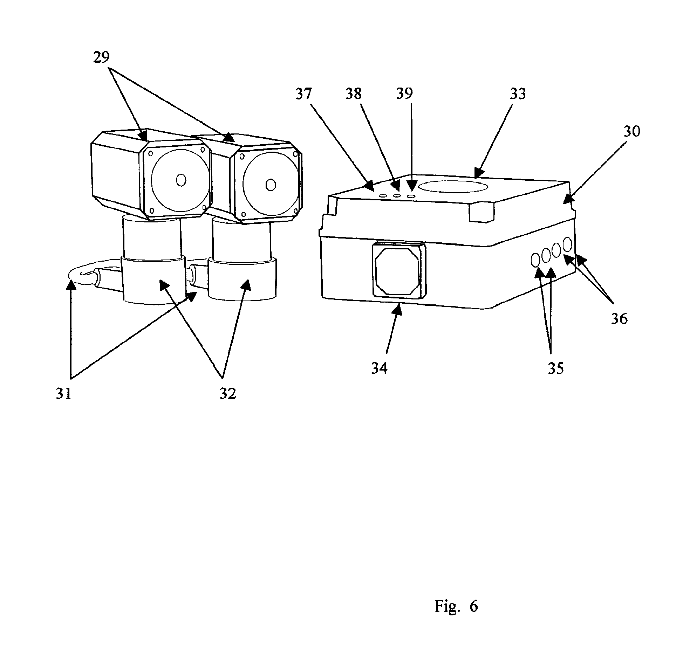

As shown in Fig. 6, in a second embodiment of the inventive device, it is also possible to provide that the head 29 is not placed above the base 30, but can be used separately, in order to increase its operating flexibility. In this second embodiment, the device is composed of an ultrasonic mobile head 29, preferably made of stainless steel, mechanically separated from the control unit 30, but electrically joined through special, suitably screened multi-pole cables 31. In this case, the unit 30 can also drive two heads for a total of two double ultrasonic channels. The modified heads 29 have a real mobile part and a fixed aluminium block 32 that can be easily installed through a simple bracket. Inside the aluminium block 32, there are the servomotor (not shown), suitably screened from ultrasonic disturbances, and a hollow traction shaft that transports the electric wires inside it.

In this version, the device does not provide for the operating control of ultrasonic channels; moreover, the forced ventilation has been added inside the control unit 30 through the opening mouths 33, 34. The internal part of the unit 40 has the already previously specified essential components, that are supply transformer, main PCB, supply PCB, cooling fan, current-limiting resistors and output connectors 35, 36 for the heads 29. Since there are two double-output ultrasonic power channels, two LEDs 38, 39 are aimed, together with an internal buzzer, to warn about which pair of tweeters has been blocked by the protection. The LED 37 signals when the device has been turned on. The modified unit 30 can be placed up to a distance of about 30 meters from the heads 29.

In detail, summarising, the ultrasonic mobile head 1 is preferably made of satin-coated aluminium or stainless steel, and comprises the ultrasonic emitters 3, 4, that are composed of piezoelectric transducers ("tweeters") interlocked with a related ultrasonic transducer 5, 6 that received the produced signal and converts it in electric signals, which, suitably amplified, are evaluated by the programmable micro-controller, that detects their operation in order to perform internal and/or external signalling. The piezoelectric tweeters 3, 4 are able to emit ultrasound frequencies up to about 40 khz.

The double traction shaft 7, preferably made of steel, threaded in its lower part, is joined to a suitable socket head screw or screw joint for the disconnection or replacement of the head 1.

The connector and multi-pole cable 8, preferably made of teflon, is used for communicating electric signals from the control unit 2 to the head 1.

The base 2 is equipped with a turning-on LED 9, a motor operation LED 10, a channel 1 emission operation (left tweeter) LED 11, a channel 2 emission operation (right tweeter) LED 12, a machine block (general default and buzzer on) LED 13, a main switch 14, a light network connector 15 and an external protection fuse 16.

There are further a micro-switch 17 for cyclically detecting the movement, a plate 19 for connection to the servomotor shaft, beams 20, threaded stretchers 21, a control plate 22 of the traction shaft, small U-shaped bars 23 made of aluminium for blocking the ball bearing 24, and a female 10-pole connector 25, preferably made waterproof.

As regards the electronic part, there are preferably a supply transformer 26, a supply card 27 and a main card 28.

In the variation in Fig. 6, it is possible to see the modified ultrasonic mobile heads 29, the modified unit body 30, the signal transmission cables 31, the fixed block 32 of heads 29, the mouth 33 of the cooling fan for the control unit 30, the air outlet mouth 34, the ultrasonic signal output connectors 35 (two channels), the servomotor driving output connectors 36 (two channels), the turning-on LED 37, the left channel block LED 38, and the right channel block LED 39.

A hardware interface is further provided for transferring the warning signals, possibly, to a GSM modem apparatus (not shown) able to warn the user about the detected anomaly.

When there is no such GSM modem, signalling is obtained with a sound signal and/or with luminous warning lights.

The movement of the ultrasonic emitters 3, 4, and therefore of the head 1, 29, allows a radial coverage of the whole emission circumference since every half-circumference of the place is covered by the single emitter.

The mechanical energy is transferred from the servomotor 18 (having a thrust of about 5 Kg/cm) to the head 1, 29 axis through the small bars 23, preferably made of aluminium or brass, suitably shaped and connected by the special elastic beams 20, preferably made of steel, used in the modelling field, that allow a movement of about 180° on a plane.

The axis movement along the two directions, with a reversal rate of about 6/8 seconds between one cycle and the other, is ensured through the ball bearing 24 whose diameter is about 1.8 cm for a 6-mm shaft.

The complete mechanic is held by four screws (not shown) only to the upper body of the fixed base 2, 30 through suitable aluminium section bars, that enclose the ball bearing 24 and are connected to the servomotor 18. The plate 19, preferably made of aluminium and shaped as a "L", holds a lever micro-switch 17 that is switched through the end-of-stroke movement of the servomotor 18. This latter solution allows, through the software management, a constant control by the microchip that deals with the operating logic of the whole device, and therefore of the circular cyclic movement.

A subsequent evolution is provided for the head 1, 29 of the inventive device that will be able to perform transverse, in addition to radial, movements, namely movements on the vertical plane with respect to the ground, such as to orient the emissions in the space contained within a spherical area. Such evolution is possibly provided also with the multiple heads and with the use of many servomotors for which the control electronics is already pre-set.

The inventive device realised in this way can be used in general both in industrial and in commercial fields, to keep birds and other animals away from territory areas and restricted spaces, in order to defend them from these animals.

The device exploits the general concept of the sensitivity of some animals to ultrasounds, used in several commercial apparatus with scarce results, joined to a much less known or wholly neglected physical characteristics, dealing with sound directivity, especially ultrasounds. Through some laboratory studies performed by the inventor of the device, it has been ascertained that, at the same distance, only a few movement degrees in a circular direction of the receiver from the emission source generate a strong reduction of the emitted ultrasonic wave, with such a power as to make the effect of the provided disturbing activity useless.

The dynamic movement of the source of ultrasounds, joined to an efficient management of energies impressed to tweeters 3, 4, aiming to exploit their allowable technologic limits, in addition to operation control, demonstrated a surprising attitude of the device to keep birds and other small animals away, since they are disoriented from where the emissions come and how strong the emissions are, without however generating damages to people that are insensitive to them.

The specific field of application of the inventive device is in places disturbed by the presence of birds and rodents, such as silos, cellars, garrets, warehouses, etc., and, with some arrangements, house roofs, balconies and boats.

## Claims

1. Ultrasound dissuading device comprising a fixed base (2, 30), **characterised in that** it further comprises at least one mobile head (1, 29), adapted to operatively cooperate with said fixed base (2, 30), said mobile head (1, 29) comprising a plurality of ultrasonic emitting elements (3, 4) adapted to emit high-frequency sound waves in any direction on a plane or in the space and with any relative movement of a rotary, transverse or longitudinal type.

2. Dissuading device according to claim 1, **characterised in that** it further comprises an electronic control system whose operation is of an active type, said electronic control system being adapted to operate upon receiving emitted ultrasonic waves through ultrasonic detectors (5, 6) placed on said device.

3. Dissuading device according to claim 2, **characterised in that** said head (1, 29) is adapted to be actuated by a servomotor (18) electronically controlled by said control system in order to rotate said head (1, 29) in any position on a plane or in the space and in any direction.

4. Dissuading device according to claim 3, **characterised in that** said servomotor (18) is adapted to provide mechanical energy for the movement of said head (1, 29) through small bars (23) connected by elastic beams (20) adapted to allow a movement of about 180° on the plane, while the movement of the axis along the two directions, with a reversal rate of about 6/8 seconds between one cycle and the other, is performed through a ball bearing (24).

5. Dissuading device according to claim 4, **characterised in that** said fixed base (2, 30) comprises aluminium section bars, said section bars being adapted to enclose said ball bearing (24) and to connect to said servomotor (18) .

6. Dissuading device according to claim 1, **characterised in that** it further comprises a plate (19) adapted to keep a lever micro-switch (17) in turn adapted to be switched through the end-of-stroke movement of said servomotor (18).

7. Dissuading device according to claim 1, **characterised in that** said head (1, 29) is placed above the fixed base (2, 30) of the device, said fixed base (2, 30) containing control electronics and mechanical parts.

8. Dissuading device according to claim 1, **characterised in that** said head (1, 29) is adapted to be used separately from said fixed base (2, 30).

9. Dissuading device according to claim 1, **characterised in that** said ultrasonic emitting elements (3, 4) of said head (1, 29) are composed of piezoelectric transducers interlocked to a related transducer (5, 6), said transducer (5, 6) being adapted to receive a produced signal and to convert it into electric signals, said electric signals, when amplified, being adapted to be evaluated by a programmable micro-controller, said micro-controller being adapted to detect an operation of said device in order to perform internal and/or external signalling.

10. Dissuading device according to claim 1, **characterised in that** it is further equipped with a hardware interface for transferring alarm signals to a modem, said modem being adapted to warn a user about the presence of an anomaly.

11. Dissuading device according to claim 1, **characterised in that** it is further equipped with a hardware interface for transferring alarm signals to sound and/or luminous warning devices.

12. Dissuading device according to claim 1, **characterised in that** it is further equipped with a flexible multi-pole cable (8) and with a water-repellent connector (15), adapted to perform electric connections between said fixed base (2, 30) and said head (1, 29).

13. Dissuading device according to claim 1, **characterised in that** is equipped with a plurality of heads (1, 29) and related servomotors (18) adapted to be controlled by an electronic control system.
